# EUROPEAN PATENT APPLICATION

(11) **EP 0 709 660 A1**
(43) Date of publication of application: **01.05.1996**
(21) Application number: 95116692.5
(22) Date of filing: 23.10.1995
(51) Int. Cl.: G01L 1/22, G01D 3/028

(54) **Sensor and a method for temperature compensating for span variation in the sensor**

(30) Priority: 31.10.1994 US 332203
(71) Applicant: MOTOROLA, INC., Schaumburg, IL 60196 (US)
(72) Inventor: Schultz, Warren J., Tempe, Arizona 85283 (US); Baum, Jeffery I., Scottsdale, Arizona 85251 (US); Lucas, William L., Richmond, Virginia 23229 (US)
(74) Representative: Spaulding, Sarah Jane

(57) **Abstract**

A sensor circuit (10) and a method for compensating for span variation in the sensor circuit (10). The sensor circuit (10) comprises a transducer (12), an offset compensation network (32), and a temperature sensing network (38) monolithically integrated into a single semiconductor substrate. The transducer (12) generates a differential signal in response to a physical condition such as an applied pressure. The differential signal is compensated for offset by the offset compensation network (32). The temperature sensing circuit (38) generates a temperature sense signal that is used by a microprocessor (34) to compensate for variation in the span of operation of the offset compensated signal. Thus, an offset and span temperature compensated signal is generated in response to the physical condition.

## Description

### Background of the Invention

The present invention relates, in general, to sensors and, more particularly, to pressure sensors.

Sensors are widely used in applications such as automotive, household appliances, building ventilation, and general industrial applications to sense a physical condition such as pressure, temperature, or acceleration, and to provide an electrical signal representative of that physical condition. A conventional sensor may be constructed as a network of resistors in a resistive bridge configuration, wherein the resistive bridge has two terminals for coupling to power supply potentials and two terminals for providing a differential output signal. Typically, the bridge resistors are formed by implanting or diffusing impurity materials into a semiconductor substrate. When the sensor is exposed to the physical condition, one or more of the bridge resistors changes resistance, thereby unbalancing the resistive bridge. The electrical signal representative of the physical condition is proportional to the imbalance of the resistor network.

A drawback of resistive bridge type sensors is that they produce an output offset electrical signal at their output terminals with a null input applied. It should be noted that a sensor is at a null state when the null input of the physical condition is applied. In addition, the parameters of offset and span are sensitive to temperature in these types of sensors. As those skilled in the art are aware, the full-scale span of a sensor is defined as its output reading at a full scale input of the physical condition less its offset at the null input of the physical condition.

By way of example, the resistive bridge may be formed using piezo-resistive elements. A common technique used to compensate for temperature variation of the full-scale span of the sensor is to couple the respective power supply terminals to the resistive bridge with compensation resistors. To optimize the compensation, the compensation resistors are sized such that only about one-third of the power supply voltage reaches the bridge network and approximately two-thirds of the supply voltage is dropped across the compensation resistors. Since the sensitivity of the bridge network to changes in pressure is proportional to the voltage level from the power supply that appears at the bridge network, the sensor sensitivity is reduced by approximately two-thirds with the use of compensation resistors. Further, the decrease in sensitivity also decreases the signal-to-noise ratio of the sensor.

Accordingly, it would be advantageous to have a method and a means to compensate for the negative temperature coefficient of the full-scale span of the resistive bridge without reducing the sensitivity of the bridge network.

### Brief Description of the Drawings

FIG. 1 is a schematic block diagram illustrating a pressure sensor with offset and temperature compensation in accordance with an embodiment of the present invention;
FIG. 2 illustrates an embodiment of an offset compensation network of FIG. 1; and
FIG. 3 is a flow chart illustrating the process of compensating for temperature variation in accordance with an embodiment of the present invention.

### Detailed Description of the Drawings

Generally, the present invention provides a pressure sensor and a method of compensating for temperature variations of the pressure sensor. More particularly, the pressure sensor includes a transducer, an offset compensation network, and a temperature sense circuit monolithically integrated in a single semiconductor substrate. In one embodiment, the differential output signal from the transducer is amplified and transformed into a single-ended output signal. The single-ended output signal and the output signal from the temperature sense circuit are coupled to a microprocessor and converted into a single compensated output signal. An advantage of the compensation technique of the present invention is that it eliminates the need for compensation resistors and thus the loss of sensitivity incurred by the use of these resistors. Further, thermal coupling between the temperature sense circuit and the transducer is improved because they are monolithically integrated.

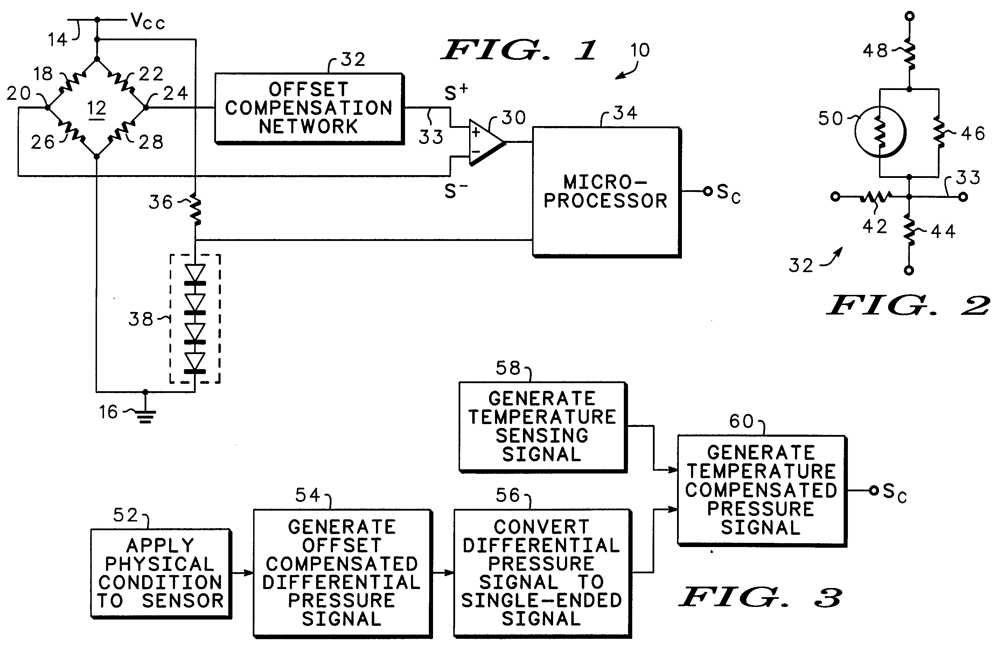

FIG. 1 illustrates a schematic block diagram of a sensor circuit 10 suitable for manufacture as an integrated circuit using conventional integrated circuit processing techniques. Sensor circuit 10 includes a transducer 12 coupled between a power supply conductor 14 and a power supply conductor 16. By way of example, transducer 12 is a piezo-resistive bridge network comprising piezo-resistive elements 18, 22, 26, and 28. By way of example piezo-resistors 18, 22, 26, and 28 are silicon resistors. Piezo-resistive element 18 is coupled between power supply conductor 14 and node 20. Piezo-resistive element 22 is coupled between power supply conductor 14 and node 24. Piezo-resistive element 26 is coupled between node 20 and power supply conductor 16 and piezo-resistive element 28 is coupled between node 24 and power supply conductor 16. It should be noted that the piezo-resistive elements are also referred to as piezo-resistors and that nodes 20 and 24 serve as transducer output nodes. A suitable operating range for power supply conductor 14 is from approximately 5 volts to approximately 24 volts and a suitable operating potential for power supply conductor 16 is ground potential. Power supply conductor 14 is also referred to as V_{CC}.

As those skilled in the art are aware, piezo-resistive elements 18, 22, 26, and 28 become unbalanced in response to an external physical condition such as, for example, an applied pressure, temperature, acceleration, etc. In other words, the physical condition deflects the semiconductor material from which piezo-resistive bridge 12 is formed, thereby increasing the resistance of one set of opposing bridge resistors, e.g., resistors 18 and 28, and decreasing the resistance of the other set of opposing bridge resistors, e.g., resistors 22 and 26. The resistance values of bridge resistors 18 and 28 increase by the same amount that the resistance values of bridge resistors 22 and 26 decrease. Thus, the voltage signals across bridge resistors 18 and 28 increase by the same amount that the voltage signals across bridge resistors 22 and 26 decrease, i.e., a differential output signal is generated. By way of example, bridge resistors 18, 22, 26, and 28 are fabricated to have resistance values of 1,000 ohms in the absence of the physical condition. In the presence of the physical condition, bridge resistors 18 and 28 may increase to approximately 1,002 ohms, while bridge resistors 22 and 26 decrease to approximately 998 ohms, i.e., resistive bridge 12 is unbalanced. The unbalance creates a differential signal between output terminals S⁺ and S⁻ that is applied to the non-inverting and inverting inputs, respectively, of differential amplifier 30.

It should be noted that signal S⁺ appears at an output terminal 33 of a compensation network 32, whereas signal S⁻ appears at node 20. It should be further noted that node 24 is coupled to the non-inverting input terminal of differential amplifier 30 via offset compensation network 32, while node 20 is coupled directly to the inverting input terminal of operational amplifier 30. Offset compensation network 32 is used to compensate for the temperature coefficient of the offset as well as to null the nominal offset of the sensor. Offset compensation network 32 may be implemented as a network of resistors and thermistors as is well known in the art.

FIG. 2 illustrates an example of an offset compensation network 32 suitable for use in sensor 10. It should be understood that the same reference numerals are used in the figures to denote the same elements. By way of example, offset compensation network 32 includes trimmable metal film resistors 42, 44, 46, and 48 and a thermistor 50. By way of example, metal film resistors 42, 44, 46, and 48 are chrome silicon resistors and thermistor 50 is a polysilicon resistor. Resistor 42 has a first terminal which serves as an input terminal for offset compensation network 32 and a second terminal 33 which serves as the output terminal of offset compensation network 32. Resistor 44 has a first terminal for coupling with a power supply conductor, such as power supply conductor 16 of FIG. 1, and a second terminal for coupling with output terminal 33. Thus, power supply conductor 16 is coupled to output terminal 33 of offset compensation network 32 by resistor 44. Resistor 46 is coupled in parallel with thermistor 50, wherein the parallel combination has a first terminal which is connected to a second terminal of resistor 42. A second terminal of the parallel combination is for coupling to power supply conductor 14 by resistor 48. In other words, resistor 48 has a first terminal for coupling with a power supply conductor, such as power supply conductor 14 of FIG. 1, and a second terminal for coupling to the second terminal of the parallel combination of resistor 46 and thermistor 50. Preferably, thermistor 50 is a p⁻ silicon resistor having the same coefficient of thermal resistance as bridge network 12. Methods of forming trimmable metal-film resistors and thermistors are known to those skilled in the art.

Referring again to FIG. 1, an output signal of differential amplifier 30 provides a sensor signal to a microprocessor 34. It should be understood that the sensor signal is uncompensated for variation due to the negative temperature coefficient of full-scale span.

In addition, sensor 10 of the present invention includes a resistor 36 coupled in series to a temperature sensing circuit 38, wherein one terminal of resistor 36 is coupled to power supply conductor 14 and one terminal of temperature sensing circuit 38 is coupled to power supply conductor 16. More particularly, a first terminal of resistor 36 is connected to power supply conductor 14, a second terminal of resistor 36 is connected to a first terminal of temperature sensing circuit 38 and a second terminal of temperature sensing circuit 38 is connected to power supply conductor 16. In addition, the first terminal of temperature sensing circuit 38 is coupled to microprocessor 34 and provides a temperature sense voltage signal, V_{TEMP}, to microprocessor 34.

Temperature sensing circuit 38 may be, for example, a diode, a series connected string of diodes, a thermistor, a band-gap reference circuit, and the like. In one embodiment, temperature sensing circuit 38 comprises a series-connected string of four diodes. The temperature coefficient of a forward biased diode is approximately -2.26 millivolts (mV) per °C and the string of four series-connected diodes has a temperature coefficient of approximately -9 mV per °C. In other words, for each degree Celsius that diode string 38 increases, the voltage, V_{TEMP}, decreases by approximately 9 millivolts. Therefore, the voltage signal V_{TEMP} serves as a temperature sense signal which is input into microprocessor 34. An important feature of the present invention is that temperature sensing circuit 38 is monolithically integrated with bridge network 12, thereby providing a precise measure of the silicon die temperature in response to ambient temperature variations.

FIG. 3 is a flow chart illustrating the process of compensating for temperature variation in accordance with an embodiment of the present invention. In a first step 52, a physical condition, e.g., pressure, is applied to sensor 10, thereby generating a differential voltage signal at first and second transducer outputs. The differential voltage signal is compensated for offset in step 54, thereby generating an offset compensated differential sensor signal having a span of operation between a minimum state of the physical condition and a maximum state of the physical condition. For example, an offset compensated differential sensor signal having a span of operation between a minimum pressure and a maximum pressure is generated. The offset compensated differential voltage signal is converted into a single-ended offset compensated voltage signal. While the offset compensated voltage signal representative of the physical condition is being generated, i.e., steps 52-56 of FIG. 3, a temperature sense signal is also being generated, i.e., step 58 of FIG. 3, by temperature sensing circuit 38 of FIG. 1. The temperature sense signal is used to compensate for variation in the span of operation of the offset compensated sensor signal due to temperature changes. In particular, a temperature compensated pressure signal S_{C} is generated, step 60 of FIG. 3, in accordance with the temperature sense signal and the single-ended offset compensated signal.

One technique for generating the temperature compensated pressure signal is to calibrate pressure sensor 10 at zero pressure differential and room temperature and then calibrate pressure sensor 10 at full-scale pressure at room temperature. In addition, pressure sensor 10 is calibrated at zero pressure differential and a temperature different than room temperature and then pressure sensor 10 is calibrated at full-scale pressure at the temperature different than room temperature. By way of example, the temperature different than room temperature is room temperature plus twenty degrees Celsius. In other words, pressure sensor 10 is calibrated at 25 °C, i.e., room temperature, and 45 °C, i.e., room temperature plus 20 °C. Using techniques known to those skilled in the art, the percent change in the offset compensated single-ended output signal over the twenty degree Celsius temperature range is calculated. In accordance with the afore-described technique, a temperature compensation factor of sensor 10 is determined to be approximately -1,900 parts per million per °C (ppm/°C). In other words, as the temperature of sensor 10 increases, the span of sensor 10 decreases by approximately 1,900 ppm/°C. Thus, the offset compensated single-ended output signal is compensated for temperature changes by shifting it by +1,900 ppm/°C in accordance with the temperature sense signal from temperature sense circuit 38. A convenient means for shifting the single-ended output signal is to store the span of sensor 10 in microprocessor 34 (shown in FIG. 1) and input the temperature sense signal from temperature sense circuit 38 as well as the offset compensated single-ended output signal into microprocessor 34. Then, microprocessor 34 uses the span of sensor 10 to provide an offset and temperature compensated output signal S_{C}. Thus, amplifier 30 and microprocessor 34 serve as a means for compensating for variation in the span of operation of the offset compensated sensor signal due to temperature changes. By way of example, microprocessor 34 is a Motorola microprocessor having part number MC68HC705P9.

By now it should be appreciated that a circuit and a method to compensate for the negative temperature coefficient of the full-scale span of the bridge network has been provided. A key feature of the present invention is that the temperature sensing circuit is monolithically integrated with the bridge network, i.e., the transducer. Thus, the operating temperature of the silicon die is precisely determined and used, in conjunction with a temperature compensation factor, to compensate for temperature variations of the sensor output signal. Further, the present invention eliminates the use of resistors for temperature compensating the full-scale span, thereby increasing the bias voltage across the bridge network and increasing the sensitivity of the bridge network. More particularly, the sensitivity of the bridge network, and thus the sensor, is improved when compared to a sensor having compensation resistors coupled between the power supply terminals and the bridge network because all of the supply voltage appears across the bridge network rather than across the compensation resistors.

## Claims

1. A sensor circuit (10), comprising:
a transducer (12) operating in response to a physical condition for providing a differential sensor signal at first (24) and second (20) transducer outputs;
an offset compensation circuit (32) having an input and an output (33), wherein the input of the offset compensation circuit (32) is coupled to the first transducer output (24) and the output of the offset compensation circuit (33) provides an offset compensated sensor signal, the offset compensated sensor signal having a span of operation between a null state of the physical condition and a full-scale state of the physical condition; and
a temperature sensing circuit (38) that provides a temperature sense signal that is used to compensate for variation in the span of operation of the offset compensated sensor signal due to temperature changes.

2. The sensor circuit (10) of claim 1, wherein the transducer (12), the offset compensation circuit (32), and the temperature sensing circuit (38) are integrated into a single semiconductor substrate.

3. The sensor circuit (10) of claim 1, further including means (30, 34) for compensating for variation in the span of operation of the offset compensated sensor signal due to temperature changes, wherein the means (30, 34) for compensating for variation in the span of operation is responsive to the temperature sense signal and generates an output signal that compensates span for variation in temperature.

4. A pressure sensor circuit (10), comprising:
a piezo-resistive bridge network (12) having first (24) and second (20) output nodes and first and second biasing nodes, wherein the piezo-resistive bridge network (12) provides output signals at the first (24) and second (20) output nodes in response to an applied pressure;
an offset compensation network (32) having an input terminal and an output terminal (33), the input terminal coupled to the first output node (24) of the piezo-resistive bridge network (32) and the output terminal for providing an offset compensated sensor signal; and
a temperature sensing circuit (38) coupled between the first and second biasing nodes, wherein the temperature sensing circuit (38) provides a temperature sense signal that is used to compensate for variation in a span of operation of the offset compensated sensor signal.

5. The pressure sensor circuit (10) of claim 4, wherein the piezo-resistive bridge network (12) comprises silicon resistors.

6. The pressure sensor circuit (10) of claim 4, wherein the offset compensation network (32) comprises:
a first resistor (42) having first and second terminals, the first terminal of the first resistor (42) serving as the input terminal of the offset compensation network (32) and the second terminal of the first resistor (42) serving as the output terminal (33) of the offset compensation network (32);
a second resistor (44) having first and second terminals, wherein the first terminal is for receiving first bias signal and the second terminal of the second resistor (44) is coupled to the second terminal of the first resistor (42);
a third resistor (46) having first and second terminals, wherein the second terminal of the third resistor (46) is coupled to the second terminal of the first resistor (42);
a thermistor (50) coupled in parallel across the third resistor (46); and
a fourth resistor (48) having first and second terminals, wherein the first terminal of the fourth resistor (48) is for receiving a second bias signal and the second terminal of the fourth resistor (48) is coupled to the first terminal of the third resistor (46).

7. The pressure sensor (10) of claim 4, wherein the offset compensated sensor signal and the temperature sensing circuit (38) are coupled to a microprocessor (34).

8. A method for temperature compensating a span variation of a transducer (12), comprising the steps of:
using (52) the transducer (12) to sense a physical condition;
generating (54) a transducer output signal in response to the sensed physical condition;
sensing (58) a temperature of the transducer; and
generating (60) a temperature sense signal in accordance with the sensed temperature of the transducer to compensate for variation in a span of operation of the transducer output signal.

9. The method of claim 8, wherein the step of generating (54) a transducer output signal further includes compensating for an offset voltage in the transducer output signal.

10. The method of claim 8, further including compensating for variation in a span of operation of the transducer output signal by comparing the transducer output signal with the temperature sense signal generated in accordance with the sensed temperature of the transducer and adjusting the transducer output signal in accordance with a correlation factor to generate an output signal that is temperature compensated for a span variation of a transducer (12).
